(19) Europäisches Patentamt
European Patent Office
Office européen des brevets

(11) **EP 2 202 337 B1**

(12) **EUROPEAN PATENT SPECIFICATION**

(45) Date of publication and mention
of the grant of the patent:
**17.04.2013 Bulletin 2013/16**

(51) Int Cl.:
*H01M 2/16* *(2006.01)*          *D01F 6/80* *(2006.01)*
*D01D 5/00* *(2006.01)*          *D04H 1/42* *(2012.01)*
*D04H 1/72* *(2012.01)*

(21) Application number: **08840009.8**

(22) Date of filing: **15.10.2008**

(86) International application number:
**PCT/JP2008/069071**

(87) International publication number:
**WO 2009/051263 (23.04.2009 Gazette 2009/17)**

(54) **SEPARATOR FOR ELECTRONIC COMPONENTS COMPRISING AROMATIC POLYAMIDE NANOFIBER**

SEPARATOR FÜR ELEKTRONISCHE KOMPONENTEN ENTHALTEND NANOFASERN AUS AROMATISCHEN POLYAMID

SEPARATEUR POUR COMPOSANTS ELECTRONIQUES COMPRENANT NANOFIBRES DE POLYAMIDE AROMATIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.10.2007 JP 2007271357**
**21.12.2007 JP 2007330148**

(43) Date of publication of application:
**30.06.2010 Bulletin 2010/26**

(73) Proprietor: **Teijin Limited**
**Osaka-shi, Osaka 541-0054 (JP)**

(72) Inventor: **KAKAZU, Aya**
**Ibaraki-shi**
**Osaka 567-0006 (JP)**

(74) Representative: **Hallybone, Huw George**
**Carpmaels & Ransford**
**One Southampton Row**
**London**
**WC1B 5HA (GB)**

(56) References cited:
JP-A- 2005 019 026      JP-A- 2005 200 779
JP-A- 2005 232 598      JP-A- 2006 037 276
JP-A- 2006 336 173      JP-A- 2006 336 173
US-B1- 7 112 389

**Description**

Field of the Invention

The invention relates to a separator for electronic components comprising an aromatic polyamide nanofiber The polyamide nanofiber that can be successfully produced by electrospinning a spinning solution having improved stability due to copolymerization with, as a third component, an aromatic diamine or an aromatic dicarboxylic acid halide that is different from a repeat unit forming the main backbone of the polymer.

Background of the Invention

As methods for fabricating nanofibers, melt blowing, sea-island composite spinning, electrospinning, and the like are known. In particular, electrospinning has been known from around the 1930s, and is capable of providing a web of fibers having a diameter of a few nanometers to a few micrometers. Accordingly, as compared with other methods, electrospinning makes it possible to produce a web having a greater surface area/volume ratio and higher porosity. Further, electrospinning enables spinning at room temperature and also allows nanofibers to be directly fabricated with simple equipment. Therefore, active research is still conducted on the production of nanofibers from an extremely wide of polymers, including biopolymers and like heat-sensitive high polymers.

For their fine diameter and large surface area, nanofibers are expected to offer advantages such as excellent moisture penetration, slipping properties, and cell recognition in a wide range of industrial fields including the automotive field, the architectural field, the medical field, etc.

With respect to electrospinning, a number of technologies have been disclosed not only about industrial production facilities but also nanofiber production methods.

In particular, a great deal of research has been disclosed for polyvinyl alcohol (PVA), polyacrylonitrile (PAN), and polyamide (PA). Such disclosures can be easily found in patent examples and technical literatures regarding electrospinning or nanofibers (JP-A-2004-322440, Composites Science and Technology 63, (2223-2253) 2003).

Aromatic polyamides are known to be useful as fibers with excellent heat resistance, flame resistance, chemical resistance, and insulation properties, and have been widely developed and applied to woven fabrics, knitted fabrics, wet/dry nonwoven fabrics, and like fiber structures for use in industrial products. Meanwhile, with respect to aromatic-polyamide-based nanofibers, although a patent document states that the fabrication thereof is possible, in many cases, no further description is given in the examples, leaving the detail unclear (JP-A-2002-249966).

According to some of the small number of patent documents or technical literatures that include examples of the production of aromatic polyamide nanofibers, a spinning solution containing a salt, such as an alkali metal salt, is used (JP-A-59-204957, JP-A-2005-200779, JP-A-2006-336173, Polymer Preprints 41, (1193-1194) 2000). The addition of an alkali metal salt in an aromatic polyamide spinning solution promotes the dissolution of the polymer, and also, the stability of the spinning solution can be maintained thereby. The presence of an alkali metal salt is thus of great importance. However, nanofibers fabricated according to the above method by electrospinning a spinning solution containing an alkali metal salt are difficult to apply to a filter for gas and liquid filtration or to an electronic material component, because in such products, alkali metal salts and like ionic contaminants should be reduced as much as possible.

Further, electrospinning of the spinning solution containing an alkali metal salt also has a problem in that uniform lamination on a collector is difficult. Against this background, stabilization of a spinning solution in electrospinning without using an alkali metal salt or the like has been desired, as well as development of aromatic polyamide nanofibers therefrom.

Disclosure of the Invention

An object of the invention is to provide a separator for electronic components comprising comprising an aromatic polyamide nanofiber obtained by electrospinning with process stability.

The present inventors conducted extensive research to achieve the above objects. As a result, the object can be achieved by copolymerizing, into an aromatic polyamide backbone having a specific repeat unit, as a third component an aromatic diamine or an aromatic dicarboxylic acid halide that is different from a structural unit of the repeat unit, so that the proportion of the third component is 1 to 10 mol% relative to the total repeat units in the aromatic polyamide, and spinning the thus-prepared polymer by electrospinning into a nanofiber.

The invention thus provides an aromatic polyamide nanofiber having a diameter of 10 to 500 nm in the section orthogonal to the fiber axis direction, the aromatic polyamide being an aromatic polyamide prepared by copolymerizing, into an aromatic polyamide backbone having a repeat unit , as a third component an aromatic diamine component or an aromatic dicarboxylic acid halide component that is different from a main structural unit of the repeat unit, so that the proportion of the third component is 1 to 10 mol% relative to the total repeat units in the aromatic polyamide, and also provides a fiber structure wherein the repeat unit of the aromatic polyamide is meta-phenylene isophthalamide.

Best Mode for Carrying Out the Invention

Embodiments of the invention will be described in detail hereinafter.

Nanofiber is a generic term for any fiber having a sectional diameter of a few nanometers to a few micrometers. As a result of extensive research to obtain an aromatic polyamide nanofiber that can be stably produced by electrospinning, the invention was accomplished.

An aromatic polyamide as used herein is a fiber-forming polymer in which one or more kinds of divalent aromatic groups are directly linked by an amide bond, and is an aromatic polyamide whose backbone has a repeat unit represented by the polymeta-phenylene isophthalamide.

The important factor in obtaining the aromatic polyamide nanofibers according to the invention, which can be stably produced by electrospinning and contain no alkali metal salt, is the use of the third component in the aromatic copolyamide nanofibers. The third component content is required to be 1 to 10 mol%, and is more preferably 2 to 5 mol%.

When the third component content is 1 to 10 mol%, the molecular chain structure is disrupted, whereby the crystallinity is reduced. As the result, stability is achieved without adding an alkali metal salt, so gelation does not occur. In a production process that requires a spinning solution to remain stable for a long period of time, such effects are extremely advantageous.

A third component content of less than 1 mol% causes gelation in the spinning solution, and is thus undesirable, while a content of more than 10 mol% causes an increase in the viscosity of the spinning solution, making it difficult to obtain a nanofiber with a desired diameter, and is thus undesirable. In addition, a small amount of an alkali metal salt and/or an alkaline earth metal may also be added to provide the spinning solution with further improved stability.

The diameter of the aromatic copolyamide nanofiber is 10 to 500 nm. A diameter of less than 10 nm is undesirable because it causes a significant decrease in the resulting strength, and a reduction of handleability of the resulting nanofibers or fiber structure having a laminate of the nanofibers. Meanwhile, a nanofiber diameter of more than 500 nm is also undesirable because it prevents significant expression of various advantages peculiar to nanofibers, for example, for use in filters, slipping properties and high submicron-dust-collection performance. The diameter is preferably 10 to 300 nm, and more preferably 50 to 200 nm.

The aromatic copolyamide concentration in the spinning solution is preferably 5 to 20 wt%, and more preferably 8 to 15 wt%. When the concentration is less than 5 wt%, gelation is less likely to occur, and the stability of the spinning solution is improved; however, when such a spinning solution is spun by electrospinning, a film-like laminate occupies a great proportion of the resulting product, and the productivity is also reduced. Such a concentration is thus undesirable. When the concentration is more than 20 wt%, the viscosity is extremely increased, and it thus is difficult to obtain a nanofiber with a desired diameter.

The intrinsic viscosity IV is 1.0 to 4.0, and is more preferably 1.0 to 2.0. When electrospinning is performed using a spinning solution with an intrinsic viscosity IV of less than 1.0, a great portion of the resulting product is likely to appear in the form of a film, or a number of knot-like polymer lumps called beads are formed on the nanofibers. Beads are acceptable as long as the number thereof is within a range where a desired performance can be achieved. However, the formation of too many beads not only impairs the desired performance but also causes an increase in the amount of residual solvent, and thus is undesirable. An intrinsic viscosity IV of more than 4.0 results in a large variation in fiber diameter, making it difficult to obtain a nanofiber with a desired diameter, and thus is undesirable.

The polydispersity (Mw/Mn) expressed with a number-average molecular weight (Mn) and a weight-average molecular weight (Mw) is 1.0 to 2.0, and more preferably 1.0 to 1.8. A molecular weight distribution of more than 2.0 results in a large variation in the diameter of the thus-fabricated nanofibers, and thus is undesirable.

The method for polymer polymerization does not have to be limited, and may be the solution polymerization or the interfacial polymerization described in JP-B-35-14399, US Patent No. 3360595, JP-B-47-10863, etc.

Specific examples of aromatic diamines represented by formulae (2) and (3), which are to be copolymerized as third components, include p-phenylene diamine, chlorophenylenediamine, methylphenylenediamine, acetylphenylenediamine, aminoanisidine, benzidine, bis(aminophenyl)ether, bis(aminophenyl)sulfone, diaminobenzanilide, and diaminoazobenzene. Specific examples of aromatic dicarboxylic acid dichlorides represented by formulae (4) and (5) include terephthalic acid chloride, 1,4-naphthalenedicarboxylic acid chloride, 2,6-naphthalenedicarboxylic acid chloride, 4,4'-biphenyldicarboxylic acid chloride, 5-chloroisophthalic acid dichloride, 5-methoxyisophthalic acid dichloride, and bis(chlorocarbonylphenyl)ether.

The spinning solution is not limited, and may be an amide-based solvent solution containing an aromatic copolyamide polymer, which is obtained by the above-mentioned solution polymerization, interfacial polymerization, etc., and may also be a solution prepared by isolating the polymer from the polymerization solution, and dissolving the same in an amide-based solvent.

Examples of amide-based solvents used herein include N,N-dimethylformamide, N,N-dimethylacetamide, N-methyl-2-pyrrolidone, dimethyl sulfoxide, and the like. N,N-dimethylacetamide is particularly preferable.

The thus-obtained copolymerization aromatic polyamide polymer solution is employed as the spinning solution for use in electrospinning. When the solution contains an alkali metal salt and/or an alkaline earth metal salt, the stability thereof is further improved, whereby the solution can be used at high concentration and low temperature; this thus is preferable. The alkali metal salt and/or alkaline earth metal salt is contained preferably in a proportion of not more than 1 wt%, more preferably not less more 0.1 wt%, with respect to the total amount of the polymer solution.

However, for some uses, for example, in a filter for gas and liquid filtration or a separator for electronic components, it is desirable to reduce alkali metal salts and like ionic contaminants as much as possible, so the solution is preferably free from an alkali metal salt and/or an alkaline earth metal salt.

In the case of an air filter, even a slight amount of salt eluted due to moisture in the air from nanofibers into the outside gas can be a seriously harmful substance in a semiconductor factory, for example, while in the case of a separator, the elution of salt into an electrolyte possibly accelerates corrosion or internal short-circuit. The importance of the absence of salt will thus be easily understandable.

The production of nanofibers by electrospinning can be performed using a suitable apparatus. Generally, the spinning solution is spun from a nozzle or a like spinning solution outlet using an electric field under the conditions of a voltage of 5.0 to 80 kV, a spinning distance of 5.0 to 50 cm, and a voltage per unit distance of 0.5 to 8.0 kv/cm; however, the conditions are not limited thereto.

The spun nanofibers are preferably laminated into a fiber structure such as a fiber web. As a method for uniform lamination, a nozzle portion or a nanofiber collector portion may be traversed, for example; however, the method is not limited thereto. The spun nanofibers are more preferably laminated on a substrate. The lamination substrate (fiber structure) is not limited, and the lamination is preferably formed on at least one kind selected from the group consisting of a woven fabric, a knitted fabric, and a nonwoven fabric. The woven fabric, knitted fabric, and nonwoven fabric may be made of synthetic fibers, natural fibers, or inorganic fibers. A polymer for synthetic fibers is not limited, and examples thereof include polyethylene terephthalate, polyacrylonitrile, polyethylene, polypropylene, nylon 12, nylon-4,6, and aromatic polyamides.

Common examples of natural fibers include cellulose fibers and protein fibers, and common examples of inorganic fibers include glass fibers, carbon fibers, and steel fibers. These fibers are readily accessible and thus preferable.

The above fibers are preferably knitted, woven, or processed into a non-woven fabric to give a fiber structure. The method for producing a non-woven fabric is not limited, and may be carding, air laying, a filament-crossing method, spunbonding, melt blowing, flash spinning, tow spreading, a paper-making method, or the like.

The fiber structure may be used as it is, and may also be further subjected to various treatments according to the intended use, such as water-repellent treatment, hydrophilic treatment, sterilizing treatment, antistatic treatment, etc.

EXAMPLES

Hereinafter, the invention will be explained in further detail with reference to examples and comparative examples. However, within the gist of the invention, the scope of the invention is not limited thereto. The characteristic values in the examples were measured by the following methods.

<Intrinsic Viscosity IV>

An aromatic copolyamide polymer was isolated from a polymerization solution and dried. The polymer was then dissolved so that polymer concentration/concentrated sulfuric acid was 100 mg/100 ml. The intrinsic viscosity thereof was measured at 30°C using an Ostwald viscometer.

<Molecular Weight Polydispersity (Mw/Mn)>

A desired polymer was isolated from a polymerization solution, and then dissolved in dimethylformamide to 7 mg/10 ml. The molecular weight polydispersity thereof was measured by gel permeation chromatography (manufactured by SHIMADZU).

<Salt Content>

After fabricating nanofibers, the elements contained therein were analyzed using a fluorescence X-ray spectrometer, system 3270 (manufactured by RIGAKU).

<Valuation Method>

(Evaluation 1) Stability of Spinning Solution

Spinning solutions prepared from the obtained polymer as in the following Examples and Comparative Examples were allowed to stand at 20°C/60% RH for 24 hours, and then visually observed. A solution that did not turn cloudy was evaluated as Good, while a solution that had turned cloudy was evaluated as Poor. Further, a spinning solution that did not turn cloudy as a whole but had white solids with a size of not less than 0.5 mm was also evaluated as Poor.

(Evaluation 2) Nanofiber Diameter Uniformity

Samples were taken at random from the fabricated nanofibers, and groups of 100 nanofibers were observed using a scanning electron microscope JSM6330F (manufactured by JEOL) to measure the length thereof. The observation was performed at a magnification of 30,000x. A group in which fibers having a diameter within a range of 10 to 500 nm accounted for not less than 75% of the total was evaluated as Good, while a group in which such fibers accounted for less than 75% was evaluated as Poor. In addition, a group in which a polymer not in the form of nanofibers notably adhered on the fibers forming the surface of a fiber structure was also evaluated as Poor.

(Overall Evaluation)

Those evaluated as poor in at least one category in the evaluations 1 and 2 were determined as poor.

Example 1

The aromatic polyamide polymer of the invention was produced by interfacial polymerization according to the method described in JP-B-47-10863, as follows.
25.13 g of isophthalic acid dichloride (99 mol%) and 0.25 g of terephthalic acid dichloride (1 mol%) were dissolved in 125 ml of tetrahydrofuran having a moisture content of 2 mg/100 ml, and then cooled to -25°C. With stirring the mixture, a solution of 13.52 g of meta-phenylene diamine (100 mol%) in 125 ml of the above tetrahydrofuran was trickled thereto over about 15 minutes, thereby giving a white emulsion (A). Separately, 13.25 g of anhydrous sodium carbonate was dissolved in 250 ml of water at room temperature. The mixture was cooled to 5°C with stirring to precipitate sodium carbonate hydrate crystals, thereby giving a dispersion (B). The emulsion (A) and the dispersion (B) were vigorously mixed. Mixing was continued for further two minutes, and then 200 ml of water was added for dilution, and the resulting polymer was precipitated as a white powder. The product was collected from the polymerized system by filtration, washed with water, and dried, thereby giving a desired polymer. The intrinsic viscosity IV of the obtained polymer is shown in Table 1.
The obtained polymer was dissolved in N,N-dimethylacetamide to a concentration of 10 wt%, and then allowed to stand at 20°C/60% RH for 24 hours. The stability of the polymer solution was evaluated by visual observation. The result is shown in Table 1.
Nanofibers were produced by electrospinning according to the method described in JP-A-2006-336173. The obtained polymer was dissolved in N,N-dimethylacetamide to a concentration of 10 wt%, and electrospinning was performed under an electric field applied at 1 kV/cm, thereby giving nanofibers on cellulose paper. The obtained nanofibers were observed using a scanning electron microscope to measure the diameter of the fibers. The percentage of fibers having a diameter within a range of 50 to 200 nm was calculated. The result is shown in Table 1.

Examples 2 to 5

According to the same production method as in Example 1, the same operation as in Example 1 was performed except for changing the amount of the third component as shown in Table 1. The results are shown in Table 1.

Examples 6 and 7

According to the same production method as in Example 1, the same operation as in Example 1 was performed except for changing the amount of the terephthalic acid dichloride and the fiber structure on which fibers are laminated (laminated fiber structure) as shown in Table 1. The results are shown in Table 1.

Example 8

According to the same production method as in Example 1, the same operation as in Example 1 was performed, except that the spinning solvent was N-methyl-2-pyrrolidone, and that the fiber structure was changed as shown in Table 1. The results are shown in Table 1.

Examples 9 to 11

According to the same production method as in Example 1, the same operation as in Example 1 was performed, except that Licl (alkali metal salt) and Cacl2 (alkaline earth metal salt) were added to the spinning solution as shown in Table 1. The results are shown in Table 1.

Comparative Example 1

According to the same production method as in Example 1, the same operation as in Example 1 was performed, except that polymerization was performed with 25.25 g of isophthalic acid dichloride (100 mol%) and 13.52 g of meta-phenylene diamine (100 mol%) without adding terephthalic acid dichloride. The results are shown in Table 1.

Comparative Example 2

According to the same production method as in Example 1, the same operation as in Example 1 was performed except for changing the amount of the third component as shown in Table 1. The results are shown in Table 1.
Next, the fiber-laminated structures of Example 3 were changed, and the performance as an air filter or as a separator was evaluated. The following describes the evaluation.

<Nanofiber Diameter Uniformity>

Samples were taken at random from the fabricated nanofibers, and groups of 100 nanofibers were observed using a scanning electron microscope JSM6330F (manufactured by JEOL) to measure the length thereof. The observation was performed at a magnification of 30, 000×. A group in which fibers having a diameter within a range of 50 to 200 nm accounted for not less than 95% of the total was evaluated as Good, while a group in which such fibers accounted for less than 95% was evaluated as Poor. In addition, a group in which a polymer not in the form of nanofibers notably adhered on the fibers forming the surface of a fiber structure was also evaluated as Poor.

<Evaluation Method for Air Filter>

A 100 mm × 100 mm sample was cut from the obtained fiber structure, and air containing test particles, 0.3-$\mu$m-diameter NaCl particles, was adjusted to a face velocity of 5.3 cm/s. The difference in pressure between front and back of the filter was measured using a micro-differential pressure gauge. Further, the NaCl particle concentrations $C_{IN}$ and $C_{OUT}$ on the upstream side and the downstream side in the fiber structure, respectively, were each measured using a particle counter. The collection efficiency was determined by the following formula:

$$\texttt{collection efficiency (\%) = (1 - C_{IN}/C_{OUT}) \times 100.}$$

As a filter, lower the differential pressure the better, and higher the collection efficiency the better.

<Evaluation Method for Separator>

(1) Measurement of Gas Permeability

Measurement is conducted according to JIS P8117.

(2) MacMillan Number

**[0055]** A 200 mm$\phi$ sample is cut from the obtained composite structure, and inserted between two SUS electrode. The MacMillan number is calculated by dividing the ionic conductivity of an electrolyte by the conductivity calculated from AC impedance at 10 kHz. The electrolyte is prepared from 1M LiBF$_4$ EC/PC adjusted to 1/1 weight ratio. The measurement temperature is 25°C. A smaller number indicates a higher ion permeability and thus is preferable.

Example 12

According to the same production method as in Example 3, the same operation as in Example 3 was performed, except that the fiber structure on which fibers are laminated (laminated fiber structure) was changed as shown in Table 2. The filter performance was then evaluated. The results are shown in Table 2.

Example 13

The same operation as in Example 12 was performed to evaluate the filter performance, except that the fiber structure (laminated fiber structure) was changed as shown in Table 2. The results are shown in Table 2.

Example 14

The same operation as in Example 13 was performed to evaluate the separator performance, except that calendering was conducted under the conditions of 300°C and 300 kgf/cm. The results are shown in Table 2.

As described above, according to the invention, a fiber structure having a laminate of salt-free aromatic copolyamide nanofibers can be stably fabricated. The invention is thus applicable to products sensitive to ionic contaminants including alkali metal salts, such as separators for electronic components, and thus is useful in the textile industry. Further, the fiber structure of the invention is applicable to a moisture-permeable, water-proof material a permselective membrane such as a separating material for a liquid- or gas-separating material; an electronic, electrical, battery, or optical material such as a filter capacitor, a display, an electromagnetic shielding material, or electronic paper; and a sheet-like material such as an intelligent film or paper. The invention thus allows a wide range of industrial application.

Table 1

| | Polymer | | | | | Spinning solution | | Laminated fiber structure | Nanofiber | Overall evaluation |
|---|---|---|---|---|---|---|---|---|---|---|
| | Third component (mol%) | | Intrinsic viscosity IV | Polydispersity Mw/Mn | Spinning solvent | Salt kind, concentration (wt%) | Stability | | Fiber diameter uniformity | |
| | TPC | PPD | | | | | | | | |
| Example 1 | 1 | 0 | 3.30 | 1.73 | DMAc | None | Good | (Cellulose paper) | Good | Good |
| Example 2 | 3 | 0 | 1.65 | 1.51 | DMAc | None | Good | (Cellulose paper) | Good | Good |
| Example 3 | 7 | 0 | 3.20 | 1.67 | DMAc | None | Good | (Cellulose paper) | Good | Good |
| Example 4 | 10 | 0 | 2.95 | 1.14 | DMAc | None | Good | (Cellulose paper) | Good | Good |
| Example 5 | 0 | 3 | 2.38 | 1.42 | DMAc | None | Good | (Cellulose paper) | Good | Good |
| Example 6 | 3 | 0 | 1.65 | 1.51 | DMAc | None | Good | (PET woven fabric) | Good | Good |
| Example 7 | 3 | 0 | 3.17 | 1.61 | DMAc | None | Good | (PP spun-bonded) | Good | Good |
| Example 8 | 3 | 0 | 1.65 | 1.51 | NMP | None | Good | (Cellulose paper) | Good | Good |
| Example 9 | 3 | 0 | 1.65 | 1.51 | DMAc | $CaCl_2$/0.1 | Good | (Cellulose paper) | Good | Good |
| Example 10 | 3 | 0 | 1.65 | 1.51 | DMAc | $CaCl_2$/1.0 | Good | (Cellulose paper) | Good | Good |
| Example 11 | 3 | 0 | 1.65 | 1.51 | DMAc | LiCl/0.1 | Good | (Cellulose paper) | Good | Good |
| Comparative Example 1 | 0 | 0 | 1.76 | 1.29 | DMAc | None | Poor | (Cellulose paper) | Good | Poor |

(continued)

| | Polymer | | | | | Spinning solution | | | Laminated fiber structure | Nanofiber | Overall evaluation |
|---|---|---|---|---|---|---|---|---|---|---|---|
| | Third component (mol%) | | Intrinsic viscosity IV | Polydispersity Mw/Mn | Spinning solvent | Salt kind, concentration (wt%) | Stability | | | Fiber diameter uniformity | |
| | TPC | PPD | | | | | | | | | |
| Comparative Example 2 | 0.5 | 0 | 1.70 | 1.33 | DMAc | None | Poor | | (Cellulose paper) | Good | Poor |

Explanation of abbreviations in the table
TPC: Terephthalic acid dichloride
PPD: Paraphenylenediamine
DMAc: N,N-dimethylacetamide
NMP: N-methyl-2-pyrrolidone
PET: Polyethylene terephthalate
PP: Polypropylene

Table 2

| | Nanofiber | Laminated fiber structure | Filter performance evaluation | | Separator performance evaluation | | | |
|---|---|---|---|---|---|---|---|---|
| | Fiber diameter uniformity | | Collection efficiency [%] | Pressure loss [Pa] | Gas permeability [sec/300 cm³] | Thickness [μm] | MacMillan number | MacMillan number × thickness [μm] |
| Example 12 | Good | (PET nonwoven fabric) | 99.96 | 125 | | | | |
| Example 13 | Good | (Aramid paper) | | | 17 | 20 | 7.2 | 144 |
| Example 14 | Good | (Aramid paper) | | | 35 | 20 | 8.4 | 168 |

EP 2 202 337 B1

## Claims

1. A separator for electronic components, **characterized by** comprising an aromatic polyamide nanofiber having a diameter of 10 to 500 nm in the section orthogonal to the fiber axis direction, **characterized in that** the aromatic polyamide is an aromatic polyamide prepared by copolymerizing, into an aromatic polyamide backbone having a repeat unit, as a third component an aromatic diamine component or an aromatic dicarboxylic acid halide component that is different from a main structural unit of the repeat unit, so that the proportion of the third component is 1 to 10 mol% relative to the total repeat units in the aromatic polyamide,
   wherein the repeat unit of the aromatic polyamide is meta-phenylene isophthalamide.

2. A separator for electronic components according to claim 1, wherein the aromatic polyamide nanofiber does not contain an alkali metal salt and/or an alkaline earth metal salt.

3. A separator for electronic components according to claim 1, wherein the aromatic diamine and the aromatic dicarboxylic acid halide that serve as third components are represented by formula (2) or (3) and formula (4) or (5), respectively:

   $H_2N-Ar2-NH_2$    formula (2)

   $H_2N-Ar2-Y-Ar2-NH_2$    formula (3)

   $XOC-Ar3-COX$    formula (4)

   $XOC-Ar3-Y-Ar3-COX$    formula (5)

   wherein Ar2 is a divalent aromatic group different from Ar1, Ar3 is a divalent aromatic group different from Ar1, Y is at least one atom or functional group selected from the group consisting of an oxygen atom, a sulfur atom, and an alkylene group, and X is a halogen atom.

## Patentansprüche

1. Separator für elektronische Bauteile, **dadurch gekennzeichnet, dass** er eine Nanofaser aus aromatischem Polyamid mit einem Durchmesser von 10 bis 500 nm im zur Faserachsenrichtung orthogonalen Schnitt, **dadurch gekennzeichnet, dass** es sich bei dem aromatischen Polyamid um ein aromatisches Polyamid handelt, das dadurch hergestellt wird, dass man in eine Hauptkette eines aromatischen Polyamids mit einer Wiederholungseinheit als dritte Komponente eine aromatische Diaminkomponente oder eine aromatische Dicarbonsäurehalogenidkomponente, die von der Hauptstruktureinheit der Wiederholungseinheit verschieden ist, so copolymerisiert, dass der Anteil der dritten Komponente 1 bis 10 Mol-%, bezogen auf die gesamten Wiederholungseinheiten in dem aromatischen Polyamid, beträgt,
   wobei es sich bei der Wiederholungseinheit des aromatischen Polyamids um meta-Phenylenisophthalamid handelt.

2. Separator für elektronische Bauteile nach Anspruch 1, wobei die Nanofaser aus aromatischem Polyamid kein Alkalimetallsalz und/oder Erdalkalimetallsalz enthält.

3. Separator für elektronische Bauteile nach Anspruch 1, wobei das aromatische Diamin und das aromatische Dicarbonsäurehalogenid, die als dritte Komponenten dienen, durch Formel (2) und (3) bzw. Formel (4) und (5) wiedergegeben werden:

   $H_2N-Ar2-NH_2$    Formel (2)

   $H_2N-Ar2-V-Ar2-NH_2$    Formel (3)

   $XOC-Ar3-COX$    Formel (4)

   $XOC-Ar3-Y-Ar3-COX$    Formel (5)

   wobei Ar2 für eine zweiwertige aromatische Gruppe, die von Ar1 verschieden ist, steht, Ar3 für eine zweiwertige aromatische Gruppe, die von Ar1 verschieden ist, steht, Y für mindestens ein Atom oder eine funktionelle Gruppe aus der Gruppe bestehend aus einem Sauerstoffatom, einem Schwefelatom und einer Alkylengruppe steht und X für ein Halogenatom steht.

**Revendications**

1. Séparateur pour composants électroniques, **caractérisé en ce qu'**il comprend une nanofibre de polyamide aromatique ayant un diamètre de 10 nm à 500 nm dans la section orthogonale à la direction de l'axe de la fibre, **caractérisé en ce que** le polyamide aromatique est un polyamide aromatique préparé par copolymérisation, dans un squelette polyamide aromatique comportant une unité de répétition, comme troisième constituant, d'un constituant diamine aromatique ou d'un constituant halogénure d'acide dicarboxylique aromatique qui est différent d'une unité structurale principale de l'unité de répétition, de telle sorte que la proportion du troisième constituant soit de 1 %mol à 10 %mol relativement au total des unités de répétition dans le polyamide aromatique, l'unité de répétition du polyamide aromatique étant le méta-phénylène-isophtalamide.

2. Séparateur pour composants électroniques selon la revendication 1, dans lequel la nanofibre de polyamide aromatique ne contient pas de sel de métal alcalin ni de sel de métal alcalino-terreux.

3. Séparateur pour composants électroniques selon la revendication 1, dans lequel la diamine aromatique et l'halogénure d'acide dicarboxylique aromatique qui servent de troisièmes constituants sont représentés par la formule (2) ou (3) et par la formule (4) ou (5), respectivement :

$H_2N$-Ar2-$NH_2$     formule (2)

$H_2N$-Ar2-Y-Ar2-$NH_2$     formule (3)

XOC-Ar3-COX     formule (4)

XOC-Ar3-Y-Ar3-COX     formule (5)

Ar2 étant un groupe aromatique divalent différent d'Ar1, Ar3 étant un groupe aromatique divalent différent d'Ar1, Y étant au moins un atome ou groupe fonctionnel sélectionné dans le groupe constitué d'un atome d'oxygène, d'un atome de soufre, et d'un groupe alkylène, et X étant un atome d'halogène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004322440 A
- JP 2002249966 A
- JP 59204957 A
- JP 2005200779 A
- JP 2006336173 A
- JP 3514399 B
- US 3360595 A
- JP 47010863 B

### Non-patent literature cited in the description

- *Composites Science and Technology,* 2003, vol. 63, 2223-2253
- *Polymer Preprints,* 2000, vol. 41, 1193-1194